# EUROPÄISCHE PATENTSCHRIFT

(11) **EP 2 491 273 B1**
(45) Veröffentlichungstag und Bekanntmachung des Hinweises auf die Patenterteilung: **10.07.2013**
(21) Anmeldenummer: 10763619.3
(22) Anmeldetag: 30.09.2010
(51) Int. Cl.: F16H 57/04, F16H 25/20

(54) **SPINDELMOTOR**
SPINDLE MOTOR
MOTEUR DE BROCHE

(30) Priorität: 22.10.2009 DE 102009050359
(43) Veröffentlichungstag der Anmeldung: 29.08.2012
(73) Patentinhaber: SEW-EURODRIVE GmbH & Co. KG, 76646 Bruchsal (DE)
(72) Erfinder: DITTES, Gerhard, 75053 Gondelsheim (DE); GABRIEL, Markus, 76694 Forst (DE)
(74) Vertreter: Tüngler, Eberhard
(86) Internationale Anmeldenummer: PCT/EP2010/005954
(87) Internationale Veröffentlichungsnummer: WO 2011/047779

(56) Entgegenhaltungen:
- WO-A1-2009/021591
- WO-A1-2009/021593
- US-A1- 2004 007 426

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus der DE 10 2008 033 602 A1 ist ein Spindelmotor bekannt, bei dem die Abstützung nicht in jedem Ausfahrzustand der Gewindespindel wirksam ist. Außerdem ist im ausgefahrenen Zustand keine Pumpwirkung für die Ölschmierung erzielbar.

Aus der DE 10 2009 007 958 ist ein Spindelmotor bekannt, bei dem ebenfalls die Abstützung nicht in jedem Ausfahrzustand der Gewindespindel wirksam ist.

Aus der WO 2009/021591 A1 ist als nächstliegender Stand der Technik ein Spindelmotor mit einer spindelintegrierten Ölpumpe bekannt.

Aus der WO 20091021593 A1 ist ein Spindelmotor mit einer spindelintegrierten Ölpumpe bekannt.

Aus der US 200410007426 A1 ist ein Schmiersystem mit Ventilen bekannt, bei dem der Druck in einem Spindelmutterintegrierten Ölreservolr konstant gehalten wird, indem Ventile eingesetzt werden. Dabei wird die Spindelmutter aus einem Baslsteil (dortiges Bezugszeichen 30) und einer damit dicht verbundenen Abdeckhülse (dortiges Bezugszeichen 36) gebildet.

Der Erfindung liegt daher die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass er einen Elektromotor mit einem Rotor umfasst, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist in einem Gehäuseteil
wobei zur axialen Führung ein Führungsteil mit der Spindelmutter und der Kolbenstange verbunden ist,
zwischen Kolbenstange und Gewindespindel eine Ventileinheit angeordnet ist
und in der Gewindespindel zumindest einen Schmierstoffkanal zur Durchleitung von Schmierstoff vorgesehen ist, an der ein Ventil, insbesondere Rückschlagventil, vorgesehen ist,
insbesondere zur Bildung einer passiven Schmierstoffförderung innerhalb des Spindelmotors.

Von Vorteil ist dabei, dass ein Schmierstoffkreislauf und somit eine Schmierung angetrieben wird, die beim Betrieb des Spindelmotors wirkt, wobei ein Hin- und Herbewegen des Spindelmotors vorausgesetzt wird. Es ist also ein ständiger Betrieb ohne Unterbrechung für Fettschmierungen und dergleichen ermöglicht. Außerdem ist eine besonders kompakte Bauart ermöglicht und geringe Reibungsverluste sind vorsehbar. Insbesondere ist eine Lebensdauerschmierung mittels Befüllen des Spindelbereiches mit einem Ölbad ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Da die erfindungsgemäße Pumpe einen gerichteten Schmierstoffkreislauf bewirkt, wird das Öl in jeder Einbaulage gefördert, also auch dann, wenn die Einbaulage derart ist, dass der Motor oben angeordnet ist. Wenn jedoch die Einbaulage derart ist, dass die Schmiermittelpumpe kein Öl fördern kann, da im Ansaugbereich der Pumpe kein Öl vorhanden ist, sind die Elemente selbst im Ölbad eingetaucht, da sie dann unten sind. Somit ist eine Ölversorgung der Elemente unabhängig von der Einbaulage gegeben. Als Elemente sind Lager und Dichtungen, wie Wellendichtringe und dergleichen schmiermittelbetriebene Elemente vorsehbar.

Bei Ein- und Ausfahren der Kolbenstange werden Druckänderungen erzeugt. Hierzu ist der Spindeibereich gegen den Raumbereich des Elektromotors und gegen die Umgebung entsprechend abgedichtet mit Dichtungen, die einen Überdruck von mehr als 2 bar zu abdichten in der Lage sind. Im Folgenden werden diese Dichtungen auch als Hochdruckdichtungen bezeichnet.

Bei einer vorteilhaften Ausgestaltung sind die Ventileinheit und das Ventil derart gerichtet angeordnet, dass ein gerichteter geschlossener Schmierstoffkreislauf bewirkt ist, insbesondere bei wiederholter Hin- und Herbewegung. Von Vorteil ist dabei, dass in jeder Einbaulage dieser Schmierstoffkreislauf angetrieben ist und somit eine Schmierung bewirkbar ist. Die Schmierung ist also besonders effektiv ausgeführt. Denn auch bei kleinsten Hin- und Herbewegungen ist eine Schmierstoffförderung ausführbar.

Bei einer vorteilhaften Ausgestaltung ist der zumindest eine Schmierstoffkanal aus zumindest einer oder aus zwei Schmierstoffbohrungen zusammengesetzt. Von Vorteil ist dabei, dass der Schmierstoffkanal nicht eine rein radiale oder rein axiale Bohrung sein muss sondern Öffnungen verbindet, die nicht in rein axialer oder rein radialer Richtung hintereinander angeordnet sind.

Bei einer vorteilhaften Ausgestaltung ist das Ventil an dem vom Motor abgewandten Ende der Gewindespindel angeordnet, wobei das Ventil mit dem Schmierstoffkanal verbunden ist. Von Vorteil ist dabei, dass das Ventil direkt beaufschlagbar ist mit den Druckänderungen. Bei einer vorteilhaften Ausgestaltung umfasst die Ventileinheit eine Überdrucksicherung. Von Vorteil ist dabei, dass die Dichtungen des Spindelmotors schützbar sind.

Bei einer vorteilhaften Ausgestaltung umfasst die Ventileinheit eine Ventilplatte, insbesondere eine ringförmig ausgeführte, die axiale Durchlässe aufweist, welche durch eine Membran verschließbar sind. Von Vorteil ist dabei, dass ein einfacher und wirksamer Aufbau ermöglicht ist.

Bei einer vorteilhaften Ausgestaltung drückt ein Federelement die Ventilplatte gegen einen Vorsprung eines Ventilgehäuseteils der Ventileinheit, so dass bei Überschreiten der gegen die Federkraft gerichteten Druckkraft infolge eines Überdrucks eine Überdrucksicherung vorgesehen ist. Von Vorteil ist dabei, dass ein einfacher und kostengünstiger Aufbau ausführbar ist.

Bei einer vorteilhaften Ausgestaltung ist am Schmierstoffkanal ein Filterelement angeordnet, insbesondere zwischen der Ventileinheit und dem Schmierstoffkanal, wobei das Filterelement Abdichtfunktion zwischen Ventileinheit und Spindelmutter ausführt. Von Vorteil ist dabei, dass eine Filterung des direkt in die Ventileinheit eintretenden oder austretenden Schmierstoffs ausgeführt wird.

Bei einer vorteilhaften Ausgestaltung ist am axialen Endbereich der Gewindespindel eine Abstützung gegen die Kolbenstange vorgesehen, die in jedem Ausfahrzustand des Spindelmotors abstützend wirksam ist. Von Vorteil ist dabei, dass in jedem Ausfahrzustand eine Abstützung vorhanden ist und somit eine Querkraftbelastung in jedem Ausfahrzustand zugelassen ist.

Bei einer vorteilhaften Ausgestaltung ist am axialen Endbereich der Gewindespindel ein Lager angeordnet, mit dem die Gewindespindel an der Innenseite der Kolbenstange abgestützt ist, insbesondere unter Zwischenordnung eines Abstützteils, insbesondere wobei das Lager axial fest angeordnet ist. Von Vorteil ist dabei, dass Reibverluste verringerbar sind.

Bei einer vorteilhaften Ausgestaltung ist im Inneren des Spindelmotors, insbesondere im Spindelbereich abtriebsseitig vom Elektromotor, das Ölbad vorgesehen. Insbesondere ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise urtgestört bleibt.

Bei einer vorteilhaften Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

Bei einer vorteilhaften Ausgestaltung ist die Dichtung als Wellendichtring ausgeführt, der in einem Gehäuseteil seinen Sitz hat, welches auch einen Sitz zur Aufnahme des Lagers der Gewindespindel aufweist,

wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebenen, insbesondere ölbetriebene Dichtelemente einsetzbar sind, die auch bei einem Überdruck von 0 bis 2 bar Dichtheit gewährleisten.

Bei einer vorteilhaften Ausgestaltung ist der zumindest eine Schmierstoffkanal aus zumindest einer oder aus zwei Schmierstoffbohrungen zusammengesetzt. Insbesondere umfasst die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einer vorteilhaften Ausgestaltung umfasst die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einer vorteilhaften Ausgestaltung ist das Ventil zwischen einer Einlassöffnung und dem Schmierstoffkanal ist, insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einer vorteilhaften Ausgestaltung umfasst das Ventil zumindest eine von einer Feder gegen eine Öffnung gedrückte Kugel. Von Vorteil ist dabei, dass das Ventil mit einfachen und kostengünstigen Mitteln herstellbar ist.

Bei einer vorteilhaften Ausgestaltung mündet der Schmierstoffkanal zumindest mit seinem zweiten Ende derart im Bereich der Dichtung, dass Schmierstoff der Dichtung zugeführt wird.

Von Vorteil ist dabei, dass Die Dichtung als Wellendichtring ausführbar ist und der mittels des Schmierstoffkanals herangeführte Schmierstoff die Dichtheit gewährleistet.

Bei einer vorteilhaften Ausgestaltung mündet der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einer vorteilhaften Ausgestaltung umfasst die Ventileinheit eine Überdrucksicherung. Von Vorteil ist dabei, dass ein Schutz der Dichtungen und weiterer Teile erreicht ist. Außerdem sind die Verluste des Spindelmotors vermindert, weil bei Einfahren der Kolbenstange der Überdruck abbaubar ist und somit keine hohen Gegenkräfte gegen die Antriebskraft aufgebaut werden.

Bei einer vorteilhaften Ausgestaltung umfasst die Ventileinheit eine Ventilplatte, insbesondere eine ringförmig ausgeführte, die axiale Durchlässe aufweist, welche durch eine Membran verschließbar sind. Von Vorteil ist dabei, dass eine ringförmige Ventileinheit um die Gewindespindel herum anordenbar ist und somit ein gerichteter Schmiermittelkreislauf erreichbar ist.

Bei einer vorteilhaften Ausgestaltung drückt ein Federelement die Ventilplatte gegen einen Vorsprung eines Ventilgehäuseteils der Ventileinheit, so dass bei Überschreiten der gegen die Federkraft gerichteten Druckkraft infolge eines Überdrucks eine Überdrucksicherung vorgesehen ist. Von Vorteil ist dabei, dass eine Überdrucksicherung in einfacher Weise herstellbar ist.

Bei einer vorteilhaften Ausgestaltung ist am Schmierstoffkanal ein Filterelement angeordnet, insbesondere zwischen der Ventileinheit und dem Schmierstoffkanal, wobei das Filterelement Abdichtfunktion zwischen Ventileinheit und Spindelmutter ausführt. Von Vorteil ist dabei, dass der gerichtete Schmiermittelkreislauf durch das Filter geführt ist und somit nicht nur eine gute Schmierung und eine Wärmeaufspreizung sondern auch eine Reinigung des Schmierstoffs bewirkbar ist.

Bei einer vorteilhaften Ausgestaltung ist am axialen Endbereich der Gewindespindel eine Abstützung gegen die Kolbenstange vorgesehen, die in jedem Ausfahrzustand des Spindelmotors abstützend wirksam ist. Von Vorteil ist dabei, dass Querkraftbelastungen und Schwingungen verringerbar sind.

Bei einer vorteilhaften Ausgestaltung ist am axialen Endbereich der Gewindespindel ein Lager angeordnet, mit dem die Gewindespindel an der Innenseite der Kolbenstange abgestützt ist, insbesondere unter Zwischenordnung eines Abstützteils, insbesondere wobei das Lager axial fest angeordnet ist. Von Vorteil ist dabei, dass die auftretende Relativdrehgeschwindigkeit vom Lager aufnehmbar ist und außerdem eine einfach herstellbare Abstützung vorsehbar ist.

Bei einer vorteilhaften Ausgestaltung ist die Gewindespindel mit dem Rotor gelagert in einem Gehäuseteil des Elektromotors. Von Vorteil ist dabei, dass Lager einsparbar sind

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil. Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

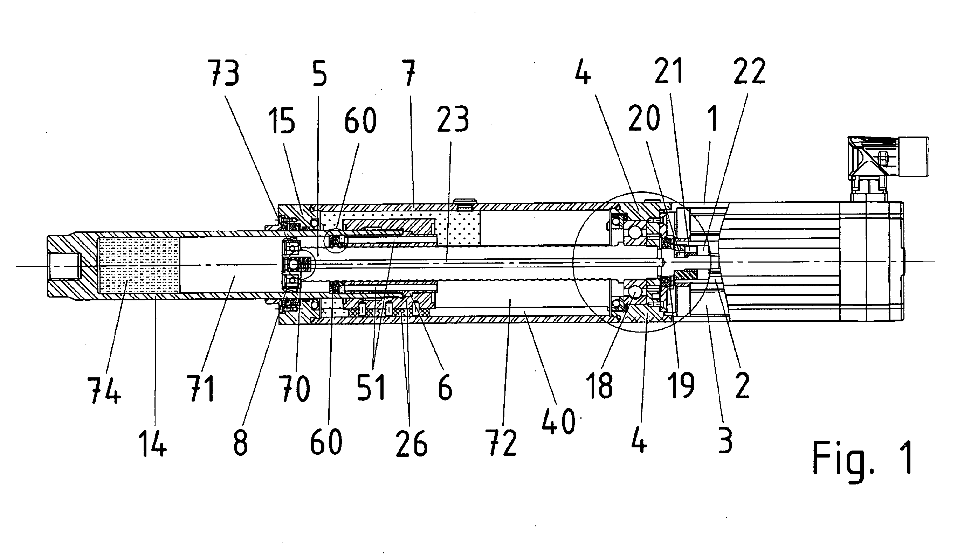

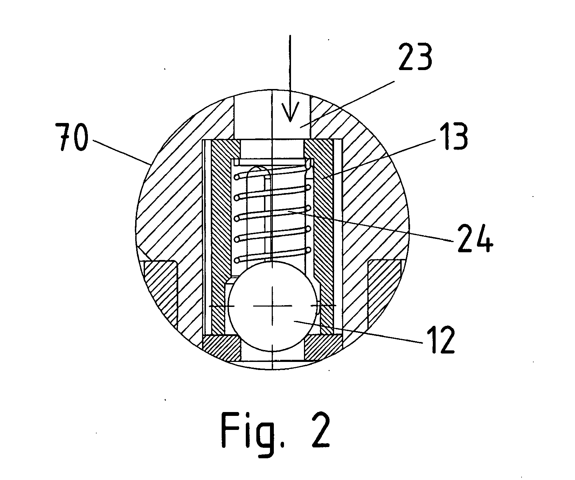

In der Figur 1 ist ein erfindungsgemäßer Spindelmotor in Schnittansicht gezeichnet, wobei der Spindelmotor in einem weit ausgefahrenen Zustand sich befindet. In Figur 2, 3 und 4 sind jeweilige Ausschnitte hiervon vergrößert dargestellt, wobei die Einbauorientierung derart ist, dass die Kolbenstange in Gravitationsrichtung unten gerichtet ist. Der Ölsumpf 74 sammelt sich hierbei unten in der Kolbenstange 14.

Dabei ist in Figur 2 das Rückschlagventil 70 vergrößert dargestellt.

In Figur 3 ist die Fließrichtung des Öls durch die Radialbohrung 30 gut zu erkennen.

In Figur 4 ist eine Zulaufventileinheit 60 vergrößert dargestellt.

In Figur 5 ist eine angeschnittene Darstellung der Zulaufventileinheit 60 gezeigt.

In der Figur 6 ist der erfindungsgemäße Spindelmotor in Schnittansicht gezeichnet, wobei der Spindelmotor im eingefahrenen Zustand sich befindet. In Figur 7, 8 und 9 sind jeweilige Ausschnitte hiervon vergrößert dargestellt, wobei die Einbauorientierung derart ist, dass die Kolbenstange in Gravitationsrichtung unten gerichtet ist. Der Ölsumpf 74 sammelt sich hierbei unten in der Kolbenstange 14.

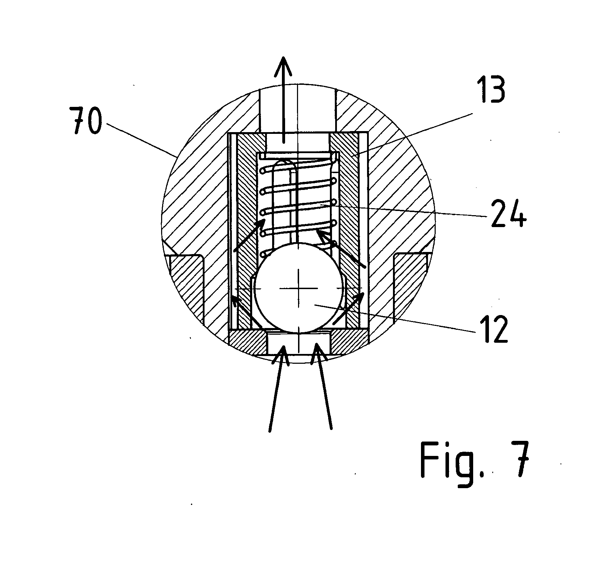

Dabei ist in Figur 7 das Rückschlagventil 70 vergrößert dargestellt.

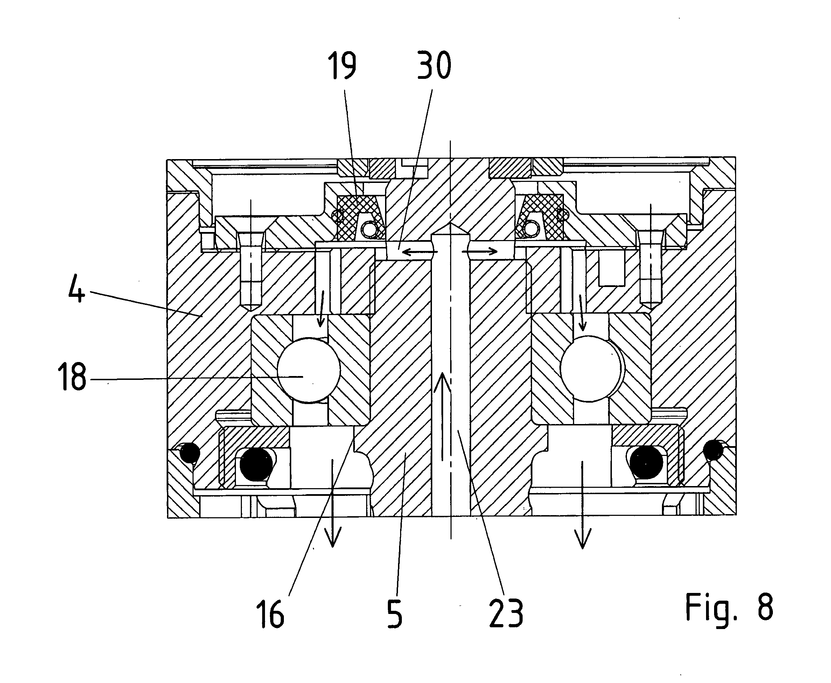

In Figur 8 ist die Fließrichtung des Öls durch die Radialbohrung 30 gut zu erkennen.

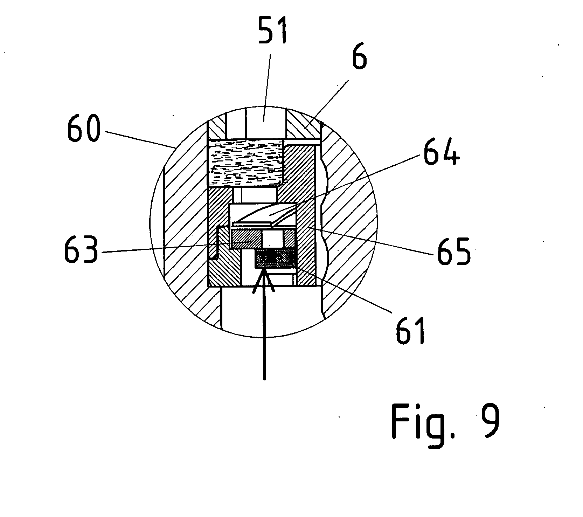

In Figur 9 ist eine Zulaufventileinheit 60 vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugsweise ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist ein Klauenteil 20 und ein Klauenteil 22 auf, zwischen denen ein Kunststoffstern 21 angeordnet ist. Vorzugsweise ist diese Wellenkupplung spielfrei.

Eine im Gehäuseteil 4 angeordneter Dichtung 19 dichtet den Spindelinnenraum gegen den Motor hin ab.

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von 0 bis 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 6 axial bewegt, weil sie über Führungsteile, wie Führungsteil 26, das mit Linearführvorrichtungen verbunden ist, linear geführt ist.

Das Gehäuseteile 7 weist an seiner Innenseite axial verlaufende Führungsnuten 40 auf zum Eingriff von Nutenstein-ähnlichen Ausprägungen des Führungsteils 26, so dass eine Drehmomentstütze gebildet ist.

Zur Abstützung der Gewindespindel 5 ist an deren erstem axialen Endbereich ein Kugellager vorgesehen, an dessen Außenring eine Abstützung 8, insbesondere aus Teflon oder einem Kunststoff, vorgesehen ist, wobei die Abstützung somit die Gewindespindel mit dem Kugellager 73 abstützt gegen die Kolbenstange 14. Die Werkstoffe, insbesondere Teflon, sind dabei für eine Mangelschmierung oder einen zumindest zeitweisen Trockenlauf geeignet ausgewählt. Dabei nimmt das Lager 73 die Relativdrehung zwischen Kolbenstange 14 und Gewindespindel 5 auf.

Die Abstützung 8 fährt mit der Gewindespindel 5 mit und verliert somit in keiner Ausfahrstellung den Kontakt, auch nicht, wenn die Kolbenstange weit heraus gefahren wird.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil 70 und 60 durch auftretenden lokalen Überdruck aktiviert. Hierzu wird die Kugel 12 von einer Ausnehmung in der Hülse 13 gegen die Federkraft eines Federelements 24 abgehoben und das Öl fließt durch die Hülse 13 an der Kugel 12 vorbei in die Schmierstoffbohrung 23 und wird bis zum anderen axialen Endbereich gefördert und dort durch eine Radialbohrung 30 befördert, wo es dann austritt im Bereich des Lagers 18 und der Dichtung 19.

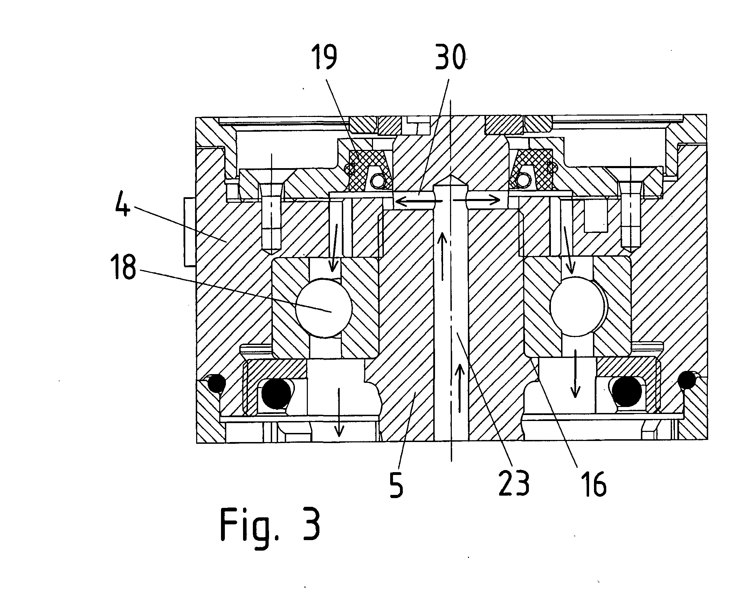

Figur 3 zeigt den Bereich um die Radialbohrung 30 herum deutlich vergrößert. Dabei strömt das Öl von der Radialbohrung 30 durch das Gehäuseteil 4 in den Zwischenraum 72

Von dort gelangt es dann in den Zwischenraum 72 zwischen Gehäuseteil 7 und Gewindespindel 5. In der Spindelmutter 6 sind axial verlaufende Bohrungen 51 vorgesehen, die diesen Zwischenraum mit dem Raumbereich 71 zwischen Gewindespindel 5 und Kolbenstange 14 verbinden. Am axialen Ende dieser Bohrungen 51 ist eine Zulaufventileinheit 60 vorgesehen, die zwar einen Durchfluss von Öl vom Zwischenraum 72 zum Raumbereich 71 erlaubt, nicht aber in umgekehrter Richtung, so lange nicht ein kritischer Überdruck im Raumbereich 71 gegenüber dem Zwischenraum 72 besteht.

Im Raumbereich 71 sammelt sich das Öl bei vertikaler Einbaulage an und bildet den Ölsumpf 74.

Somit ist eine Schmierung in jeder Einbaulage gewährleistet.

Die mittels der Ventile bei Ausführung von Hubbewegungen gebildete Ölpumpe ist besonders effektiv wirksam, wenn die Kolbenstange nach unten also in Gravitationsrichtung weist. Wenn sie jedoch nach oben weist, wird das selbsttätige Zurückfließen von Öl zum Lager 18 und der Dichtung 19 aus dem Raumbereich 71 heraus verhindert.

Auch in dieser Montagerichtung des Spindelmotors ist also eine Schmierung des Gewindetriebs, des Führungsteils und der Nutensteine ausgeführt.

Die Kugel 12 wird bei Abbau des lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise ein Radialwellendichtring, der für einen Überdruck bis 2 bar ausgelegt ist.

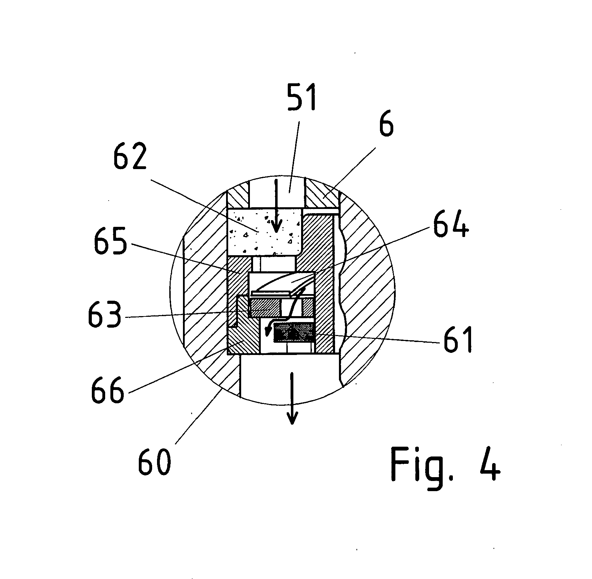

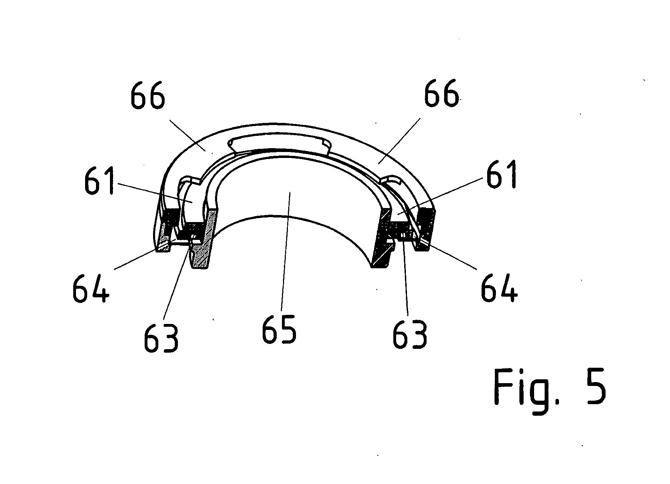

In der Figur 4 ist die Zulaufsventileinheit 60 näher im Schnitt dargestellt. In Figur 5 ist eine angeschnittene Darstellung gezeigt. Solange im Zwischenraum 72 ein kleinerer Druck als im Raumbereich 71 herrscht, wird dabei eine ringförmige Membran 61 auf eine ringförmige Ventilplatte 63 gedrückt, die axial gerichtete, nicht gezeigte Ausnehmungen aufweist und somit werden die Ausnehmungen verschlossen. Kehren sich die Druckverhältnisse um, wird die Membran 61 abgehoben von den Ausnehmungen bis zur Begrenzung des Ventilgehäuses 66, das ringförmig gestaltet ist und auf ein Ventilgehäuseteil 65 aufgeschraubt oder mit diesem pressverbunden ist. Ein Federelement 64 drückt die Ventilplatte 63 gegen einen Vorsprung am Ventilgehäuseteil 66. Sobald ein genügend großer Überdruck, also einem entsprechend größeren Druck im Raumbereich 71 im Vergleich zum Zwischenraum 72, herrscht, wird die Ventilplatte 63 gegen die Federkraft gedrückt und abgehoben von dem Vorsprung, so dass ein Durchlass zum Überdruckabbau entsteht. Ein Filterelement 62, insbesondere ein Filtervlies, dichtet das Ventilgehäuse 65 gegen die Spindelmutter 6 ab im axialen Endbereich der Entlüftungsbohrungen 51. Somit wird das durchtretende Öl auch gefiltert.

Die Funktion der Pumpe ergibt sich in folgender Weise: Die Kolbenstange 14 fährt nach unten aus. Dadurch taucht das Führungsteil 26 in das Ölbad ein.

Durch die Bohrungen 51 in der Spindelmutter 6 wird durch den entstehenden Unterdruck in der Kolbenstange 14 Schmierstoff in die Entlüftungsbohrungen 51 angesaugt. Das durchströmte Filterelement 62 hält Verschmutzungen zurück. Die Zulaufventileinheit 60 lässt den Schmierstoff, also Öl, durch die geöffnete Membrane weiter einströmen. Der Schmierstoff fließt durch die Abstützung in den unteren Teil der Kolbenstange 14 und sammelt sich dort.

Wenn die Kolbenstange 14 nach oben ausfährt, entsteht ein Druck durch die eintauchende Spindel 5, wodurch die Membrane 61 in der Ventileinheit 60 verschlossen wird. Somit öffnet sich die federbelastete Kugel 71 des als Rückschlagventil arbeitenden Ventils 70. Der Schmierstoff wird durch die Bohrung 23 in der Spindel 5 zur Lagerstelle 4 gefördert und versorgt das Lager 18 und den Wellendichtring 19 mit Schmierstoff.

Schmierstoff fließt durch das Lager 18 wieder nach unten.

Das so zirkulierende Öl verteilt die anfallende Verlustwärme.

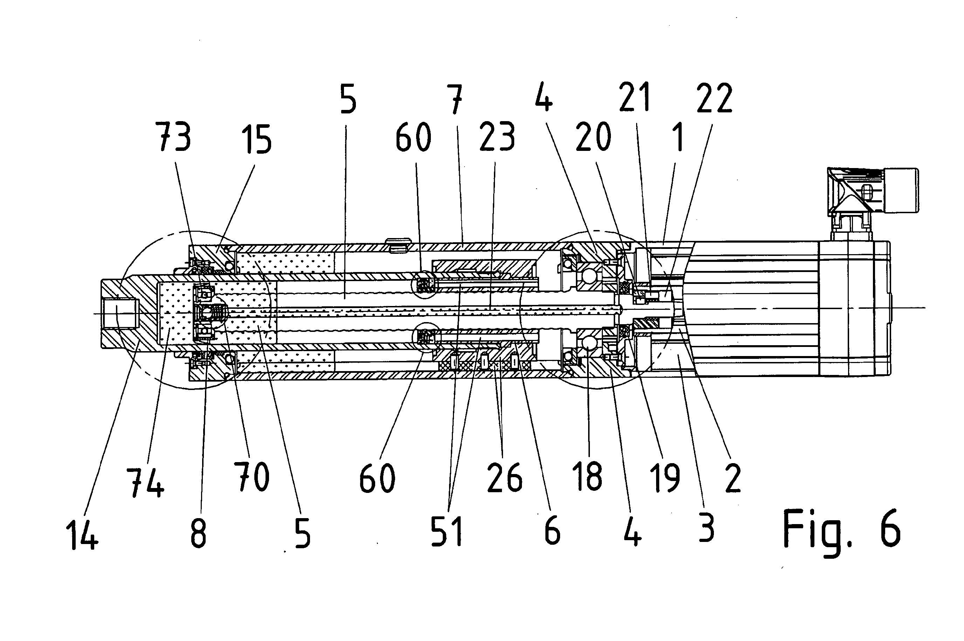

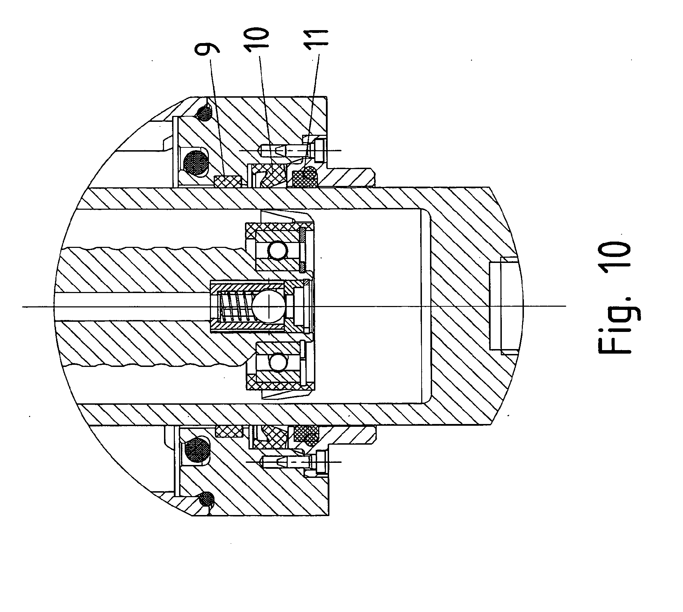

Figur 10 zeigt einen vergrößerten Ausschnitt von Figur 6, wobei der Führungsring 9, der Dichtring 10 und der Abstreifer 11 näher dargestellt sind.

### Bezugszeichenliste

1 Motorgehäuse
2 Rotorwelle
3 Stator
4 Gehäuseteil
5 Gewindespindel
6 Spindelmutter
7 Gehäuseteil
8 Abstützung
9 Führungsring
10 Dichtring
11 Abstreifer
12 Kugel
13 Hülse
14 Kolbenstange
15 Gehäuseteil
18 Lager
19 Dichtung, Wellendichtring
20 Klauenteil
21 Kunststoffstern
22 Klauenteil
23 Schmierstoffbohrung
24 Federelement
26 Führungsteil
30 Radialbohrung
40 axiale Führungsnut für Führungsteil 26
51 Bohrungen
60 Zulaufventileinheit
61 Membran
62 Filterelement
63 Ventilplatte
64 Federelement
65 Ventilgehäuse
66 Ventilgehäuse
70 Ventil
71 Raumbereich
72 Zwischenraum
73 Lager, insbesondere Kugellager
74 Ölsumpf

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange (14) verbundenen Spindelmutter (6) im Eingriff steht,
wobei die Spindelmutter (6) mit Kolbenstange (14) axial geführt ist in einem Gehäuseteil (7), wobei zur axialen Führung ein Führungsteil (26) mit der Spindelmutter (6) und der Kolbenstange (14)
verbunden ist,
**dadurch gekennzeichnet, dass**
zwischen Kolbenstange (14) und Gewindespindel (5) eine Ventileinheit (60) angeordnet ist und in der Gewindespindel (5) zumindest ein Schmierstoffkanal zur Durchleitung von Schmierstoff vorgesehen ist, an der ein Ventil (70), insbesondere Rückschlagventil (70). vorgesehen ist,
**wobei in der Spindelmutter (6) axial durchgehende Bohrungen (51) angeordnet sind, an deren axialem Ende eine Zulaufventileinheit (60) angeordnet ist,**
insbesondere zur Bildung einer passiven Schmierstoffförderung innerhalb des Spindelmotors.

2. Spindelmotor nach mindestens einem der vorangegangenen Ansprüche,
**dadurch gekennzeichnet, dass**
die Ventileinheit und das Ventil (70) derart gerichtet angeordnet sind, dass ein gerichteter geschlossener Schmierstoffkreislauf bewirkt ist, insbesondere bei wiederholter Hin- und Herbewegung.

3. Spindelmotor nach mindestens einem der vorangegangenen Ansprüche,
**dadurch gekennzeichnet, dass**
der zumindest eine Schmierstoffkanal aus zumindest einer oder aus zwei Schmierstoffbohrungen (23) zusammengesetzt ist.

4. Spindelmotor nach mindestens einem der vorangegangenen Ansprüche,
**dadurch gekennzeichnet, dass**
das Ventil (70) an dem vorn Motor abgewandten Ende der Gewindespindel (5) angeordnet ist, wobei das Ventil (70) mit dem Schmierstoffkanal verbunden ist.

5. Spindelmotor nach mindestens einem der vorangegangenen Ansprüche,
**dadurch gekennzeichnet, dass**
das Ventil (70) zwischen einer Einlassöffnung und dem Schmierstoffkanal vorgesehen ist, insbesondere innerhalb der Gewindespindel (5).

6. Spindelmotor nach mindestens einem der vorangegangenen Ansprüche,
**dadurch gekennzeichnet, dass**
das Ventil (70) zumindest eine von einer Feder gegen eine Öffnung gedrückte Kugel (12) umfasst.

7. Spindelmotor nach mindestens einem der vorangegangenen Ansprüche,
**dadurch gekennzeichnet, dass**
der Schmierstoffkanal zumindest mit seinem zweiten Ende derart im Bereich einer Dichtung (19) mündet, dass Schmierstoff der Dichtung (19) zugeführt wird.

8. Spindelmotor nach mindestens einem der vorangegangenen Ansprüche,
**dadurch gekennzeichnet, dass**
**der Schmierstoffkanal zumindest mit seinem zweiten Ende zwischen einer Dichtung (19) und einem Lager (73) mündet, insbesondere damit Schmierstoff der Dichtung (19) und dem Lager (73) zugeführt wird.**

9. Spindelmotor nach mindestens einem der vorangegangenen Ansprüche,
**dadurch gekennzeichnet, dass**
die Ventileinheit eine Überdrucksicherung umfasst.

10. Spindelmotor nach mindestens einem der vorangegangenen Ansprüche,
**dadurch gekennzeichnet, dass**
die Ventileinheit eine Ventilplatte (63), insbesondere eine ringförmig ausgeführte, umfasst, die axiale Durchlässe aufweist, welche durch eine Membran (61) verschließbar sind.

11. Spindelmotor nach mindestens einem der vorangegangenen Ansprüche,
**dadurch gekennzeichnet, dass**
ein Federelement (24) die Ventilplatte (63) gegen einen Vorsprung eines Ventilgehäuseteils der Ventileinheit drückt, so dass bei Überschreiten der gegen die Federkraft gerichteten Druckkraft infolge eines Überdrucks eine Überdrucksicherung vorgesehen ist.

12. Spindelmotor nach mindestens einem der vorangegangenen Ansprüche,
**dadurch gekennzeichnet, dass**
am Schmierstoffkanal ein Filterelement (62) angeordnet ist, insbesondere zwischen der Ventileinheit und dem Schmierstoffkanal, wobei das Filterelement (62) Abdichtfunktion zwischen Ventileinheit und Spindelmutter (6) ausführt.

13. Spindelmotor nach mindestens einem der vorangegangenen Ansprüche,
**dadurch gekennzeichnet, dass**
am axialen Endbereich der Gewindespindel (5) eine Abstützung (8) gegen die Kolbenstange (14) vorgesehen ist, die in jedem Ausfahrzustand des Spindelmotors abstützend wirksam ist.

14. Spindelmotor nach mindestens einem der vorangegangenen Ansprüche,
**dadurch gekennzeichnet, dass**
am axialen Endbereich der Gewindespindel (5) ein Lager (73) angeordnet ist, mit dem die Gewindespindel (5) an der Innenseite der Kolbenstange (14) abgestützt ist, insbesondere unter Zwischenordnung eines Abstützteils 8, insbesondere wobei das Lager (73) axial fest angeordnet ist.

15. Spindelmotor nach mindestens einem der vorangegangenen Ansprüche,
**dadurch gekennzeichnet, dass**
im Inneren des Spindelmotors, insbesondere im Spindelbereich abtriebsseitig vom Elektromotor ein Ölbad vorgesehen ist.

## Claims

1. Spindle motor,
comprising an electric motor having a rotor, which is connected to a threaded spindle (5), the thread of which is engaged with a thread of a spindle nut (6) connected to a piston rod (14),
wherein the spindle nut (6) is axially guided together with the piston rod (14) in a housing part (7),
wherein a guide part (26) is connected to the spindle nut (6) and the piston rod (14) for axially guidance,
**characterised in that**
a valve unit (60) is arranged between the piston rod (14) and the threaded spindle (5)
and at least one lubricant channel for conducting lubricant is provided in the threaded spindle (5), on which a valve (70), in particular a check valve (70), is provided,
wherein axial through bores (51) are arranged in the spindle nut (6), at the axial end of which bores a supply valve unit (60) is arranged,
in particular to form a passive lubricant delivery inside the spindle motor.

2. Spindle motor according to at least one of the preceding claims,
**characterised in that**
the valve unit and the valve (70) are arranged in such a directed manner as to produce a directed closed lubricant circuit, in particular on repeated to-and-fro movement.

3. Spindle motor according to at least one of the preceding claims,
**characterised in that**
the at least one lubricant channel is composed of at least one or of two lubricant bores (23).

4. Spindle motor according to at least one of the preceding claims,
**characterised in that**
the valve (70) is arranged at that end of the threaded spindle (5) which faces away from the motor, the valve (70) being connected to the lubricant channel.

5. Spindle motor according to at least one of the preceding claims,
**characterised in that**
the valve (70) is provided between an inlet opening and the lubricant channel, in particular inside the threaded spindle (5).

6. Spindle motor according to at least one of the preceding claims,
**characterised in that**
the valve (70) comprises at least one ball (12) pressed by a spring against an opening.

7. Spindle motor according to at least one of the preceding claims,
**characterised in that**
the lubricant channel opens, at least at its second end, in such a manner in the region of a seal (19) that lubricant is supplied to the seal (19).

8. Spindle motor according to at least one of the preceding claims,
**characterised in that**
the lubricant channel opens, at least at its second end, between a seal (19) and a bearing (73), in particular so that lubricant is supplied to the seal (19) and the bearing (73).

9. Spindle motor according to at least one of the preceding claims,
**characterised in that**
the valve unit comprises overpressure protection.

10. Spindle motor according to at least one of the preceding claims,
**characterised in that**
the valve unit comprises a valve plate (63), in particular of annular form, which has axial passages closable by a membrane (61).

11. Spindle motor according to at least one of the preceding claims,
**characterised in that**
a spring element (24) presses the valve plate (63) against a projection of a valve housing part of the valve unit, so that, if the compressive force directed against the spring force due to an overpressure is exceeded, overpressure protection is provided.

12. Spindle motor according to at least one of the preceding claims,
**characterised in that**
a filter element (62) is arranged on the lubricant channel, in particular between the valve unit and the lubricant channel, the filter element (62) performing a sealing function between valve unit and spindle nut (6).

13. Spindle motor according to at least one of the preceding claims,
**characterised in that**
a support (8) against the piston rod (14) is provided at the axial end region of the threaded spindle (5), which support is active in a supporting manner in every extended state of the spindle motor.

14. Spindle motor according to at least one of the preceding claims,
**characterised in that**
a bearing (73) is arranged at the axial end region of the threaded spindle (5), with which bearing the threaded spindle (5) is supported on the inside of the piston rod (14), in particular with interposition of a supporting part 8, in particular with the bearing (73) being axially fixedly arranged.

15. Spindle motor according to at least one of the preceding claims,
**characterised in that**
an oil bath is provided in the interior of the spindle motor, in particular in the spindle region on the output side of the electric motor.

## Revendications

1. Moteur à broche,
comprenant un moteur électrique avec un rotor qui est relié à une broche filetée (5), dont le filetage est en prise avec un filetage d'un écrou de broche (6) relié à une tige de piston (14),
sachant que l'écrou de broche (6) muni de la tige de piston (14) est guidé axialement dans un élément de boîtier (7),
sachant que, pour le guidage axial, un élément de guidage (26) est relié à l'écrou de broche (6) et à la tige de piston (14),
**caractérisé en ce qu'**une unité soupape (60) est disposée entre la tige de piston (14) et la broche filetée (5),
et au moins un canal de lubrifiant pour le passage de lubrifiant est prévu dans la broche filetée (5), sur laquelle est prévue une soupape (70), en particulier une soupape anti-retour (70),
sachant que des perçages axialement traversants (51) sont disposés dans l'écrou de broche (6), à l'extrémité axiale desquelles est disposée une unité soupape d'amenée (60), en particulier pour former un système d'acheminement passif de lubrifiant à l'intérieur du moteur à broche.

2. Moteur à broche selon la revendication précédente, **caractérisé en ce que** l'unité soupape et la soupape (70) sont disposées en étant orientées de telle sorte qu'est créé un circuit fermé orienté de lubrifiant, en particulier lors d'un mouvement répété de va-et-vient.

3. Moteur à broche selon au moins une des revendications précédentes, **caractérisé en ce que** le canal de lubrifiant au moins unique est composé d'au moins un ou de deux alésages pour lubrifiant (23).

4. Moteur à broche selon au moins une des revendications précédentes, **caractérisé en ce que** la soupape (70) est prévue à l'extrémité de la broche filetée (5) qui est éloignée du moteur, sachant que la soupape (70) est reliée au canal de lubrifiant.

5. Moteur à broche selon au moins une des revendications précédentes, **caractérisé en ce que** la soupape (70) est prévue entre une ouverture d'admission et le canal de lubrifiant, en particulier à l'intérieur de la broche filetée (5).

6. Moteur à broche selon au moins une des revendications précédentes, **caractérisé en ce que** la soupape (70) comprend au moins une bille (12) pressée contre une ouverture par un ressort.

7. Moteur à broche selon au moins une des revendications précédentes, **caractérisé en ce que** le canal de lubrifiant débouche au moins par sa deuxième extrémité dans la région d'un joint d'étanchéité (19) de telle sorte que du lubrifiant est apporté au joint d'étanchéité (19).

8. Moteur à broche selon au moins une des revendications précédentes, **caractérisé en ce que** le canal de lubrifiant débouche au moins par sa deuxième extrémité entre un joint d'étanchéité (19) et un palier (73), afin que du lubrifiant soit apporté au joint d'étanchéité (19) et au palier (73).

9. Moteur à broche selon au moins une des revendications précédentes, **caractérisé en ce que** l'unité soupape comprend une sécurité contre les surpressions.

10. Moteur à broche selon au moins une des revendications précédentes, **caractérisé en ce que** l'unité soupape comprend un disque de soupape (63), notamment réalisé annulaire, qui présente des passages axiaux qui peuvent être fermés par une membrane (61).

11. Moteur à broche selon au moins une des revendications précédentes, **caractérisé en ce qu'**un élément formant ressort (24) presse le disque de soupape (63) contre une saillie d'un élément de boîtier de soupape de l'unité soupape, de sorte qu'une sécurité contre les surpressions est formée en cas de dépassement, suite à une surpression, de la force de pression dirigée à l'encontre de la force de ressort.

12. Moteur à broche selon au moins une des revendications précédentes, **caractérisé en ce qu'**un élément filtrant (62) est disposé sur le canal de lubrifiant, en particulier entre l'unité soupape et le canal de lubrifiant, sachant que l'élément filtrant (62) exerce une fonction d'étanchement entre l'unité soupape et l'écrou de broche (6).

13. Moteur à broche selon au moins une des revendications précédentes, **caractérisé en ce qu'**un appui (8) contre la tige de piston (14) est prévu dans la région terminale axiale de la broche filetée (5), appui qui exerce une fonction d'appui dans tous les états de déploiement du moteur à broche.

14. Moteur à broche selon au moins une des revendications précédentes, **caractérisé en ce qu'**un palier (73) est disposé dans la région terminale axiale de la broche filetée (5), palier par lequel la broche filetée (5) est soutenue contre le côté intérieur de la tige de piston (14), en particulier avec intercalation d'un élément d'appui (8), sachant notamment que le palier (73) est disposé de manière axialement fixe.

15. Moteur à broche selon au moins une des revendications précédentes, **caractérisé en ce qu'**un bain d'huile est prévu à l'intérieur du moteur à broche, en particulier dans la région de la broche du côté de sortie du moteur électrique.
